# EUROPÄISCHE PATENTSCHRIFT

(11) **EP 2 258 593 B1**
(45) Veröffentlichungstag und Bekanntmachung des Hinweises auf die Patenterteilung: **23.04.2014**
(21) Anmeldenummer: 10156295.7
(22) Anmeldetag: 12.03.2010
(51) Int. Cl.: B60T 10/02

(54) **Fahrzeugwechselgetriebe mit Sekundärretarder**
Vehicular switching drive with secondary retarder
Boîte à vitesses de véhicule dotée d'un retardateur secondaire

(30) Priorität: 04.06.2009 DE 102009026721
(43) Veröffentlichungstag der Anmeldung: 08.12.2010
(73) Patentinhaber: ZF Friedrichshafen AG, 88038 Friedrichshafen (DE)
(72) Erfinder: Sauter, Frank, 88074, Meckenbeuren (DE); Wanninger, Heinz, 88074, Meckenbeuren (DE)

(56) Entgegenhaltungen:
- EP-A1- 0 367 008
- JP-A- 6 144 198

## Beschreibung

Die Erfindung betrifft ein Fahrzeugwechselgetriebe mit einem Sekundärretarder nach dem Oberbegriff von Anspruch 1.

Neben den Betriebsbremsen eines Fahrzeuges, insbesondere eines Nutzfahrzeuges, die im Regelfall einem Verschleiß unterliegende Reibungsbremsen sind, werden zusätzliche, verschleißfreie Verzögerungseinrichtungen, wie Retarder, von den Fahrzeugherstellern angeboten. Zu den Retardern zählen sowohl zusätzlich am Getriebe oder Motor angeordnete hydrodynamische, hydrostatische oder elektrodynamische Bremseinrichtungen, als auch solche Systeme, die in Form eines "Intarders" innerhalb des Getriebegehäuses vorgesehen sind. Des Weiteren werden Retarder in Primärretarder, die in Abhängigkeit von der Motordrehzahl arbeiten, und in Sekundärretarder, die in Abhängigkeit von der Fahrzeuggeschwindigkeit arbeiten, unterschieden. Bei hydrodynamischen Retardern ist im Allgemeinen der Rotor zum Abbremsen des Fahrzeugs direkt mit einer Getriebewelle verbunden. Bei Primärretardern ist dies die Antriebswelle bzw. Getriebeeingangswelle, und bei Sekundärretardern ist dies die Getriebeabtriebswelle. Der Stator ist in der Regel gehäusefest. Der Retarder ist üblicherweise nicht aktiviert, wenn Rotor und Stator nicht mit Flüssigkeit gefüllt sind.

In der DE 41 08 658 C2 ist ein Zahnräderwechselgetriebe mit einem nachgeschalteten, hydrodynamischen Retarder beschrieben, bei dem die aus Rotor und Stator bestehende Einheit mit ihrem äußeren Umfang sehr nahe an die Getriebeabtriebswelle herangeführt ist, wobei für diesen Zweck zwischen dem Wälzlager der Getriebeabtriebswelle und dessen Abtriebsflansch ein Einbauraum genutzt wird. Dadurch können bei vorgegebener Einbaugrenze für die radialen Abmessungen von Zahnräderwechselgetriebe und Retarder der Durchmesser des Rotors und des Stators möglichst groß ausgeführt werden. Weiterhin wird durch diese Anordnung die Möglichkeit geschaffen, in einer Hochtreiberstufe die Übersetzung des Stirnradtriebes ins Schnelle zu erhöhen.

Da für den Retarder aus Kosten-, Bauraum- und Sicherheitsgründen keine Kupplung installiert ist, drehen die mechanischen Bauteile auch im Nicht-Bremsbetrieb grundsätzlich mit und erzeugen entsprechende Verluste. Ein zusätzlicher Kraftstoffverbrauch des Fahrzeugs ist die Folge. Ein Teil der Gesamtverluste des Retarders entstehen in der Hochtreiberstufe, einem Stirnradpaar, welches die Retarderdrehzahl gegenüber der Gelenkwellendrehzahl des Getriebeabtriebs ins Schnelle übersetzt. Diese Verluste entstehen im Wesentlichen aus Pansch- und Reibungsverlusten der Zahnräder. Die Retarderwelle liegt dabei häufig aus Platzgründen niedriger als die Getriebeabtriebswelle, weshalb das auf der Retarderwelle angeordnete Zahnrad ein gewisses Maß unter den sich im Betrieb des Getriebes dynamisch ändernden Ölspiegel eintaucht. Im Bremsbetrieb ist dies wünschenswert und notwendig, da dadurch die Verzahnungen sehr gut gesclimiert und gekühlt werden.

Weitere Verluste entstehen in der Lagerung des Retarders. Auch hier ist im Bremsbetrieb eine ausreichende Schmierung und Kühlung unbedingt notwendig. Im Zugbetrieb allerdings könnten die Bauteile mit deutlich weniger Öl auskommen.

Aus der EP 0 367 008 A1, nachfolgend D1 genannt, ist ein Fahrzeuggetriebe mit einem Retarder bekannt, bei dem Mittel vorgesehen sind, die eine unterschiedliche Schmierung der Lagerungen und Einrichtungen zum Antreiben mit Schmiermittel im Bremsbetrieb des Retarders gegenüber dem Nicht-Bremsbetrieb des Retarders vorsehen. Im Nicht-Bremsbetrieb wird über eine Kupplung ein Getriebe abgekoppelt, das im Bremsbetrieb ein Gebläse als Retarder antreibt. Über das Getriebe wird im Bremsbetrieb auch eine Pumpe angetrieben, die Lager und Verzahnungen mit Schmiermittel versorgt.

Der Erfindung liegt die Aufgabe zugrunde, die Schmierung und Kühlung von Bestandteilen des Retarders eines Fahrzeuggetriebes sicherzustellen und dabei Verluste zu verringern.

Die Aufgabe wird erfindungsgemäß gelöst durch ein Fahrzeuggetriebe mit einem Retarder mit den Merkmalen des Anspruchs 1. Ausgestaltungen sind Gegenstand von Unteransprüchen.

Gemäß der Erfindung wird ein Fahrzeuggetriebe mit einem hydrodynamischen Retarder vorgeschlagen mit Einrichtungen zum Antreiben und Steuern des Retarders, mit Lagerungen des Retarders und der Einrichtungen zum Antreiben und Steuern und mit Mitteln zum Schmieren und Kühlen der Lagerungen und der Einrichtungen zum Antreiben und Steuern. Dabei sind weiter Mittel vorgesehen, die eine unterschiedliche Schmierung und Kühlung der Lagerungen und Einrichtungen zum Antreiben und Steuern mit Schmier- und Kühlmittel im Bremsbetrieb des Retarders gegenüber dem Nicht-Bremsbetrieb des Retarders vorsehen.

Die Mittel, die eine unterschiedliche Schmierung und Kühlung vorsehen, sind in Abhängigkeit von Betätigungssignalen des Retarders aktiv. Dazu ist ein Steuerventil vorgesehen, das auf die Betätigungssignale beispielsweise des Bremspedals oder eines Bremshebels reagiert und den Retardersteuerdruck erzeugt und das Schmier- und Kühlmittel in Abhängigkeit des Retardersteuerdrucks abgibt. In der hydraulischen Retardersteuerung ist ein Steuerdruck vorhanden, der im Nicht-Bremsbetrieb den Wert 0 bar hat. Im Bremsbetrieb wird dieser Steuerdruck durch ein Elektromagnetventil entsprechend der Bremsmomentanforderung und des resultierenden Druckbedarfs auf Werte zwischen 0 und dem maximalen Steuerdruck eingestellt. Daraus resultiert ein entsprechender Pumpendruck. Steuerdruck und Bremsmoment stehen in direktem Zusammenhang. Je höher der Steuerdruck, desto höher wird auch das Bremsmoment im eingeschalteten Zustand des Retarders. Durch die Anbindung der Schmier- und Kühlmittelzuführung an den Steuerdruck als lastabhängige Größe wird ein lastabhängiger Schmier- und Kühlmittelvolumenstrom erzielt.

Besonders vorteilhaft ist die Erfindung, wenn das Schmier- und Kühlmittel das Betriebsmittel des Retarders ist, wobei dann vorzugsweise das aus dem Schmiermittelsumpf kommende und gekühlte Betriebsmittel zur Schmierung und Kühlung vorgesehen sein kann. Zur Schmierung könnte grundsätzlich auch das aus dem Retarder mit Auslassdruck austretende Schmiermittel Verwendung finden, jedoch ist das dem Retarder zugeführte Schmiermittel zur Kühlung besser geeignet.

In einer weiteren Ausbildungsform ist eine Pumpe zur Förderung für das Schmier- und Kühlmittel vorgesehen, die zumindest einen Teil des Betriebsmittels des Retarders zu den Lagerungen und Einrichtungen zum Antreiben und Steuern fördert.

Die Mittel zum Antreiben des Retarders können die Zahnräder der Hochtreiberstufe umfassen oder die Mittel zum Antreiben des Retarders können auch die Verzahnungen, wie Laufverzahnungen und Mitnahmeverzahnungen, sowie Kupplungen umfassen.

Zu den Mitteln zur Steuerung des Retarders gehört die Pumpe zur Förderung für das Schmier- und Kühlmittel, wobei vorzugsweise ein Saugfilter in der Ansaugleitung der Pumpe vorgesehen ist.

In einer besonders vorteilhaften Ausgestaltung sind Bohrungen und Leitungen im Retardergehäuse vorgesehen, die einerseits mit einem den Retardersteuerdruck führenden Kanal und andererseits mit den zu schmierenden und zu kühlenden Lagerungen und Einrichtungen in Verbindung stehen. Dabei können vorzugsweise in den Bohrungen und Leitungen im Retardergehäuse Blenden vorgesehen sein. Dadurch kann im Bremsbetrieb ein zusätzlicher Ölvolumenstrom zu den zu schmierenden und zu kühlenden Bauteilen geführt werden, der sich in Abhängigkeit der Belastung einstellen lässt. Durch die Verwendung von gegossenen Kanälen für die Bohrungen und Leitungen und gestanzten Blechen für die Blenden ist eine kostengünstige Umsetzung der erfinderischen Idee möglich.

Die Erfindung wird nachfolgend anhand einer Zeichnung näher erläutert. Es zeigen:
Fig. 1 eine Anordnung gemäß der Erfindung
Fig. 2 eine Ergänzung zur Anordnung nach Fig. 1

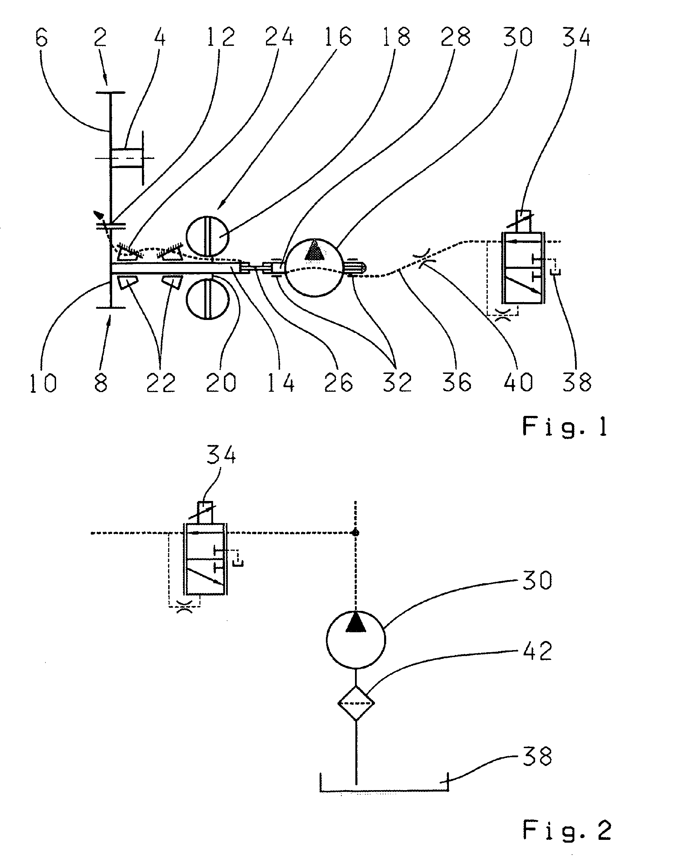

In der Fig. 1 ist schematisch die Getriebeabtriebswelle 4 eines Fahrzeuggetriebes 2 gezeigt, die ein erstes Zahnrad 6 einer Hochtreiberstufe 8 aufweist. Ein zweites Zahnrad 10 der Hochtreiberstufe 8 kämmt mit dem ersten Zahnrad 6 in einer Laufverzahnung 12. Das zweite Zahnrad 10 sitzt auf einer Rotorwelle 14 eines Retarders 16, dessen Rotor 18 auf der Rotorwelle 14 mit Hilfe einer Mitnahmeverzahnung 20 gekoppelt ist. Die Rotorwelle 14 ist mit einer Lagerung 22 im Gehäuse 24 drehbar gelagert. Über eine Pumpenkupplung 26 ist die Pumpenwelle 28 einer Pumpe 30 mit der Rotorwelle 14 verbunden. Lager 32 stellen eine drehbare Lagerung der Pumpenwelle 28 im Gehäuse 24 sicher.

Ein Steuerventil 34 erzeugt einen Retardersteuerdruck und führt im Bremsbetrieb bei aktiviertem Retarder 16 in der hier gezeigten Stellung des Steuerventils 34 über Bohrungen und Leitungen im Gehäuse 24 einen Schmier- und Kühlmittelstrom 36, der hier in Form einer unterbrochenen Linie gezeigt ist. Bei nicht aktiviertem Retarder 16, also im Nicht-Bremsbetrieb, werden die Bohrungen und Leitungen in der zweiten Stellung des Steuerventils 34 in Richtung eines Schmiermittelsumpfs 38 entleert. Zusätzlich eingebrachte Blenden 40 in den Bohrungen und Leitungen können die Verhältnisse in den Bohrungen und Leitungen zusätzlich beeinflussen.

Bei im Bremsbetrieb aktiviertem Retarder 16 wird der Schmier- und Kühlmittelstrom 36 über das Steuerventil 34 und die Blende 40 im dargestellten Ausführungsbeispiel zunächst zu den Lagern 32 der Pumpenwelle 28 gefördert. Über die Pumpenkupplung 26 gelangt der Schmier- und Kühlmittelstrom 36 weiter zu der Mitnahmeverzahnung 20 des Rotors 18 und der Lagerung 22 der Rotorwelle 14, um schließlich über die Laufverzahnung 12 weiter in Richtung des Getriebes 2 zu gelangen.

Die im Bremsbetrieb auf diese Weise mit Schmier- und Kühlmittel versorgten Elemente sind nicht grundsätzlich im Nicht-Bremsbetrieb frei von jeglicher Schmierung und Kühlung. Es ist durch die Erfindung aber angestrebt, die Verluste im Nicht-Bremsbetrieb insbesondere durch Panschen im Öl zu reduzieren, indem eine Absenkung des dynamischen Ölstands im Bereich des Hochtreibers 8 im Getriebe 2 beispielsweise durch geeignete Gestaltungen des Gehäuses 24 erzielt wird. Eine dichte Abschottung gegenüber dem restlichen Getriebe erfolgt dabei aber nicht. Durch vorhandene Spalte kann eine gewisse Menge Schmiermittel zu Verzahnungen und Lagerungen gelangen. Insbesondere im Stillstand des Getriebes 2 wird sich somit ein gleichmäßiger Ölstand im ganzen Getriebe 2 einstellen. Drehen sich die Zahnräder des Getriebes 2 wieder, wird das Schmiermittel in der Hochtreiberstufe 8 durch die Zahnräder 10, 6 an die Wandungen des Gehäuses 24 gespritzt und gelangt durch geeignete Kanäle aus dem Bereich der Hochtreiberstufe 8 hinaus. Der dynamische Ölstand im Bereich des Hochtreibers 8 sinkt dadurch soweit ab, bis sich ein Gleichgewicht aus allgemein zulaufendem Schmiermittel und abgespritztem Schmiermittel ergibt.

Das zulaufende Schmiermittel kann dabei konstruktiv soweit abgesenkt werden, dass eine ausreichende Schmierung und Kühlung im Nicht-Bremsbetrieb gewährleistet ist. Im Bremsbetrieb wird ein abgesenkter Ölstand auf Dauer aber problematisch sein. Dem wird durch den Gegenstand der Erfindung entgegen gewirkt.

Die Fig. 2 zeigt eine Abwandlung der Anordnung nach Fig. 1. In der Zuleitung zu Steuerventil 34 ist die Pumpe 30 zusammen mit einem Saugfilter 42 vorgesehen. Dadurch ist sichergestellt, dass zu den Lagerungen und Verzahnungen immer gereinigtes Schmier- und Kühlmittel aus dem Schmiermittelsumpf 38 gelangen kann.

In Retarderanwendungen der Anmelderin ist ein wesentliches Kennzeichen der gemeinsame Ölhaushalt von Getriebe und Retarder sowie eine elektrohydraulische Steuerung des Retarders mit einer Ölpumpe. Mit diesen Mitteln kann eine bedarfsrechte Schmierung und Kühlung ermöglicht werden. Der gemeinsame Ölhaushalt erlaubt die Verwendung von Öl aus der hydraulischen Steuerung des Retarders. In Verbindung mit der Pumpe ist es möglich, auch im Bremsbetrieb einen Teilölvolumenstrom am Retarder vorbei zur gezielten Schmierung und Kühlung zu verwenden.

Bezuaszeichenliste
- 2: Fahrzeuggetriebe
- 4: Getriebeabtriebswelle
- 6: erstes Zahnrad
- 8: Hochtreiberstufe
- 10: zweites Zahnrad
- 12: Laufverzahnung
- 14: Rotorwelle
- 16: Retarder
- 18: Rotor
- 20: Mitnahmeverzahnung
- 22: Lagerung
- 24: Gehäuse
- 26: Pumpenkupplung
- 28: Pumpenwelle
- 30: Pumpe
- 32: Lager
- 34: Steuerventil
- 36: Schmier- und Kühlmittelstrom
- 38: Schmiermittelsumpf
- 40: Blende
- 42: Saugfilter

## Patentansprüche

1. Fahrzeuggetriebe (2) mit einem hydrodynamischen Retarder (16) mit Einrichtungen (30) zum Antreiben und Steuern des Retarders (16), mit Lagerungen (22, 32) des Retarders (16) und der Einrichtungen (30) zum Antreiben und Steuern und mit Mitteln zum Schmieren und Kühlen der Lagerungen (22, 32) und der Einrichtungen (30) zum Antreiben und Steuern, wobei Mittel (34) vorgesehen sind, die eine unterschiedliche Schmierung und Kühlung der Lagerungen (22, 32) und Einrichtungen (8, 12, 20, 26, 30) zum Antreiben und Steuern mit Schmier- und Kühlmittel im Bremsbetrieb des Retarders (16) gegenüber dem Nicht-Bremsbetrieb des Retarders (16) vorsehen und die Mittel (34), die eine unterschiedliche Schmierung und Kühlung vorsehen, in Abhängigkeit von Betätigungssignalen des Retarders (16) aktiv sind,**dadurch gekennzeichnet, dass** ein Steuerventil (34) vorgesehen ist, das auf die Bremsbetätigungssignale reagiert und einen Retardersteuerdruck erzeugt und das Schmier- und Kühlmittel in Abhängigkeit des Retardersteuerdrucks abgibt.

2. Fahrzeuggetriebe (2) mit einem hydrodynamischen Retarder (16) nach Anspruch 1, **dadurch gekennzeichnet, dass** das Schmier- und Kühlmittel das Betriebsmittel des Retarders (16) ist.

3. Fahrzeuggetriebe (2) mit einem hydrodynamischen Retarder (16) nach Anspruch 2, **dadurch gekennzeichnet, dass** das aus dem Schmiermittelsumpf (38) kommende und gekühlte Betriebsmittel zur Schmierung und Kühlung vorgesehen ist.

4. Fahrzeuggetriebe (2) mit einem hydrodynamischen Retarder (16) nach wenigstens einem der Ansprüche 2 oder 3, **dadurch gekennzeichnet, dass** eine Pumpe (30) zur Förderung für das Schmier- und Kühlmittel vorgesehen ist, die zumindest einen Teil des Betriebsmittels des Retarders (16) zu den Lagerungen (22, 32) und Einrichtungen (30) zum Antreiben und Steuern fördert.

5. Fahrzeuggetriebe (2) mit einem hydrodynamischen Retarder (16) nach wenigstens einem der Ansprüche 1 bis 4, **dadurch gekennzeichnet, dass** die Mittel zum Antreiben des Retarders die Zahnräder (6, 10) der Hochtreiberstufe (8) umfassen.

6. Fahrzeuggetriebe (2) mit einem hydrodynamischen Retarder (16) nach wenigstens einem der Ansprüche 1 bis 5, **dadurch gekennzeichnet, dass** die Mittel zum Antreiben des Retarders Verzahnungen wie Laufverzahnungen (12) und Mitnahmeverzahnungen (20) sowie Kupplungen (26) umfassen.

7. Fahrzeuggetriebe (2) mit einem hydrodynamischen Retarder (16) nach wenigstens einem der Ansprüche 1 bis 6, **dadurch gekennzeichnet, dass** die Mittel zur Steuerung des Retarders (16) die Pumpe (30) zur Förderung für das Schmier- und Kühlmittel umfassen.

8. Fahrzeuggetriebe (2) mit einem hydrodynamischen Retarder (16) nach wenigstens einem der Ansprüche 1 bis 7, **dadurch gekennzeichnet, dass** ein Saugfilter (42) in der Ansaugleitung der Pumpe (30) vorgesehen ist.

9. Fahrzeuggetriebe (2) mit einem hydrodynamischen Retarder (16) nach wenigstens einem der Ansprüche 1 bis 8, **dadurch gekennzeichnet, dass** Bohrungen und Leitungen im Gehäuse (24) vorgesehen sind, die einerseits mit einem den Retardersteuerdruck führenden Kanal und andererseits mit den zu schmierenden und zu kühlenden Lagerungen (22, 32) und Einrichtungen (8, 12, 20, 26, 30) in Verbindung stehen.

10. Fahrzeuggetriebe (2) mit einem hydrodynamischen Retarder (16) nach Anspruch 9, **dadurch gekennzeichnet, dass** in den Bohrungen und Leitungen im Gehäuse (24) Blenden (40) vorgesehen sind.

## Claims

1. Vehicle transmission (2) with a hydrodynamic retarder (16) having devices (30) for driving and controlling the retarder (16), with mountings (22, 32) of the retarder (16) and of the devices (30) for drive and control and with means for lubricating and cooling the mountings (22, 32) and the devices (30) for drive and control, means (34) being provided which provide different lubrication and cooling of the mountings (22, 32) and devices (8, 12, 20, 26, 30) for drive and control by lubricant and coolant in the braking mode of the retarder (16), as compared with the non-braking mode of the retarder (16), and the means (34) which provide different lubrication and cooling being active as a function of actuation signals of the retarder (16), **characterized in that** a control valve (34) is provided which reacts to the brake actuation signals and generates a retarder control pressure and discharges the lubricant and coolant as a function of the retarder control pressure.

2. Vehicle transmission (2) with a hydrodynamic retarder (16) according to Claim 1, **characterized in that** the lubricant and coolant is the operating medium of the retarder (16).

3. Vehicle transmission (2) with a hydrodynamic retarder (16) according to Claim 2, **characterized in that** the operating medium coming from the lubricant sump (38) and cooled is provided for lubrication and cooling.

4. Vehicle transmission (2) with a hydrodynamic retarder (16) according to at least one of Claims 2 and 3, **characterized in that** a pump (30) for conveying the lubricant and coolant is provided, which conveys at least part of the operating medium of the retarder (16) to the mountings (22, 32) and devices (30) for drive and control.

5. Vehicle transmission (2) with a hydrodynamic retarder (16) according to at least one of Claims 1 to 4, **characterized in that** the means for driving the retarder comprise the gearwheels (6, 10) of the high-driver stage (8).

6. Vehicle transmission (2) with a hydrodynamic retarder (16) according to at least one of Claims 1 to 5, **characterized in that** the means for driving the retarder comprise toothings, such as running toothings (12) and traction toothings (20) and also clutches (26).

7. Vehicle transmission (2) with a hydrodynamic retarder (16) according to at least one of Claims 1 to 6, **characterized in that** the means for controlling the retarder (16) comprise the pump (30) for conveying the lubricant and coolant.

8. Vehicle transmission (2) with a hydrodynamic retarder (16) according to at least one of Claims 1 to 7, **characterized in that** a suction filter (42) is provided in the intake pipe of the pump (30).

9. Vehicle transmission (2) with a hydrodynamic retarder (16) according to at least one of Claims 1 to 8, **characterized in that** bores and lines are provided in the housing (24), which are connected, on the one hand, to a duct carrying the retarder control pressure and, on the other hand, to the mountings (22, 32) and devices (8, 12, 20, 26, 30) to be lubricated and cooled.

10. Vehicle transmission (2) with a hydrodynamic retarder (16) according to Claim 9, **characterized in that** diaphragms (40) are provided in the bores and lines in the housing (24).

## Revendications

1. Boîte de vitesses de véhicule (2) comprenant un ralentisseur hydrodynamique (16) avec des dispositifs (30) d'entraînement et de commande du ralentisseur (16), des supports sur palier (22, 32) du ralentisseur (16) et des dispositifs (30) d'entraînement et de commande, et des moyens pour lubrifier et refroidir les supports sur palier (22, 32) et les dispositifs (30) d'entraînement et de commande, des moyens (34) étant prévus, lesquels prévoient une lubrification et un refroidissement différents des supports sur palier (22, 32) et des dispositifs (8, 12, 20, 26, 30) d'entraînement et de commande avec un lubrifiant et un réfrigérant en mode de freinage du ralentisseur (16) par rapport au mode de non-freinage du ralentisseur (16), et les moyens (34) qui prévoient une lubrification et un refroidissement différents étant actifs en fonction de signaux d'actionnement du ralentisseur (16), **caractérisée en ce qu'**il est prévu une soupape de commande (34) qui réagit aux signaux d'actionnement de freinage et qui produit une pression de commande de ralentisseur et qui délivre le lubrifiant et le réfrigérant en fonction de la pression de commande de ralentisseur.

2. Boîte de vitesses de véhicule (2) comprenant un ralentisseur hydrodynamique (16) selon la revendication 1, **caractérisée en ce que** le lubrifiant et le réfrigérant est le fluide de travail du ralentisseur (16).

3. Boîte de vitesse de véhicule (2) comprenant un ralentisseur hydrodynamique (16) selon la revendication 2, **caractérisée en ce que** le fluide de travail provenant du carter de lubrifiant (38) et refroidi est prévu pour la lubrification et le refroidissement.

4. Boîte de vitesses de véhicule (2) comprenant un ralentisseur hydrodynamique (16) selon au moins l'une quelconque des revendications 2 ou 3, **caractérisée en ce qu'**il est prévu une pompe (30) de refoulement pour le lubrifiant et le réfrigérant, laquelle refoule au moins une partie du fluide de travail du ralentisseur (16) vers les supports sur palier (22, 32) et les dispositifs (30) d'entraînement et de commande.

5. Boîte de vitesses de véhicule (2) comprenant un ralentisseur hydrodynamique (16) selon au moins l'une quelconque des revendications 1 à 4, **caractérisée en ce que** les moyens d'entraînement du ralentisseur comprennent les roues dentées (6, 10) de l'étage démultiplicateur (8).

6. Boîte de vitesses de véhicule (2) comprenant un ralentisseur hydrodynamique (16) selon au moins l'une quelconque des revendications 1 à 5, **caractérisée en ce que** les moyens d'entraînement du ralentisseur comprennent des dentures telles que des dentures de roulement (12) et des dentures d'entraînement (20) ainsi que des embrayages (26).

7. Boîte de vitesses de véhicule (2) comprenant un ralentisseur hydrodynamique (16) selon au moins l'une quelconque des revendications 1 à 6, **caractérisée en ce que** les moyens de commande du ralentisseur (16) comprennent la pompe (30) de refoulement pour le lubrifiant et le réfrigérant.

8. Boîte de vitesses de véhicule (2) comprenant un ralentisseur hydrodynamique (16) selon au moins l'une quelconque des revendications 1 à 7, **caractérisée en ce qu'**un filtre aspirant (42) est prévu dans la conduite d'aspiration de la pompe (30).

9. Boîte de vitesses de véhicule (2) comprenant un ralentisseur hydrodynamique (16) selon au moins l'une quelconque des revendications 1 à 8, **caractérisée en ce que** des alésages et des conduites sont prévus dans le boîtier (24), lesquels sont en liaison d'une part avec un canal conduisant la pression de commande de ralentisseur et d'autre part avec les supports sur palier (22, 32) et les dispositifs (8, 12, 20, 26, 30) à lubrifier et à refroidir.

10. Boîte de vitesses de véhicule (2) comprenant un ralentisseur hydrodynamique (16) selon la revendication 9, **caractérisée en ce que** des diaphragmes (40) sont prévus dans les alésages et les conduites dans le boîtier (24).
